# EUROPEAN PATENT APPLICATION

(11) **EP 1 307 002 A1**
(43) Date of publication of application: **02.05.2003**
(21) Application number: 01402780.9
(22) Date of filing: 25.10.2001
(51) Int. Cl.: H04L 12/24, H04L 12/26, H04L 12/56

(54) **Network management system**

(71) Applicant: ALCATEL, 75008 Paris (FR)
(72) Inventor: Hofkens, Jurgen Louis, 2870 Puurs (BE); Roelens, Wim Gabriel Andy, 9140 Temse (BE); Deckers, An Maria Irène, 2860 St. Katelijne Waver (BE)
(74) Representative: Narmon, Gisèle Marie Thérèse

(57) **Abstract**

Network management systems comprise generators for generating control signals and manage a sum of all traffic signals per network-unit or per link in a network by supplying the control signals to controllers which take action. The efficiency of such management can be improved a lot, by distinguishing between traffic signals of a first kind and traffic signals of a second kind, calculating functions of at least traffic signals of one kind, and comparing calculated functions with thresholds and generating control signals in dependence of comparison results. The distinguishing can be done between controllable traffic signals and uncontrollable traffic signals and/or between traffic signals forming part of services having a guaranteed quality-of-service-level and traffic signals forming part of services not having said guaranteed quality-of-service-level. Said function may correspond with utilizable link capacities, safety margin capacities, free capacities, controllable capacities, uncontrollable capacities, controlled Label Switched Path capacities and link utilization capacities.

## Description

The invention relates to a network management system comprising a generator for generating at least one control signal for managing traffic signals in a network.

Such a network management system is generally known, with said network for example being an Internet Protocol (IP) network running Multi Protocol Label Switching (MPLS) traffic engineering and comprising network-units like switches, routers, bridges, servers etc. One or more of these network-units each comprise at least one network management system and at least one controller for controlling traffic signals in said network, with said network management system having said generator coupled to said controller for generating at least one control signal destined for said controller for managing said traffic signals in said network. The controller, in response to said control signal, for example adjusts the available capacity per link, for example by adding or removing certain wavelengths and/or by activating or deactivating (parts of) interfaces. The network management system and the controller may manage and control all traffic signals per network-unit, and/or all traffic signals per link arriving at or leaving from said network-unit, which link may be a fysical link or a logical link.

The known network management system is disadvantageous, inter alia, due to managing a sum of all traffic signals per network-unit and/or per link, which results in an inefficient management.

It is an object of the invention, inter alia, of providing a network management system as defined in the preamble which manages with an increased efficiency.

The network management system according to the invention is characterised in that said traffic signals comprise at least traffic signals of a first kind and traffic signals of a second kind, with said network management system comprising a processor for comparing at least one function of at least traffic signals of one kind with at least one threshold, and with said generator being coupled to said processor for generating said at least one control signal in dependence of at least one comparison result.

By distinguishing between at least traffic signals of a first kind and traffic signals of a second kind, and calculating at least one function of at least traffic signals of one kind (like for example a sum per time-interval of traffic signals of one kind), and comparing this calculated function with at least one threshold, said traffic signals are now managed more specifically, which results in a more efficient management.

The invention is based on the insight, inter alia, that nowadays different kinds of traffic signals can be distinguished.

The invention solves the problem, inter alia, of providing a network management system which manages with an improved efficiency.

At least a part of the inventivity of this invention is situated in realizing that traffic signals of a first kind cause more and bigger problems than traffic signals of a second kind and vice versa, dependently upon the moment in time (during the day, during the night, during happy hours etc.).

A first embodiment of the network management system according to the invention is characterised in that said traffic signals of a first kind mainly correspond with controllable traffic signals, with said traffic signals of a second kind mainly corresponding with uncontrollable traffic signals.

By distinguishing between at least controllable traffic signals (foreground) and uncontrollable traffic signals (background), in addition to the more specific management of traffic signals, the efficiency of the management is further increased due to now being able to, in response to said distinguishing, control that part of the traffic signals which can be controlled.

A second embodiment of the network management system according to the invention is characterised in that said traffic signals of a first kind form part of services having a guaranteed quality-of-service-level, with said traffic signals of a second kind forming part of services not having said guaranteed quality-of-service-level.

By distinguishing between at least traffic signals of a first kind and forming part of services having a guaranteed quality-of-service-level and traffic signals of a second kind and forming part of services not having said guaranteed quality-of-service-level (and either having an other guaranteed quality-of-service-level or having no guaranteed quality-of-service-level at all), the efficiency of the management is further increased due to now being able to, in response to said distinguishing, control (parts of) traffic signals in dependence of guaranteed quality-of-service-levels.

A third embodiment of the network management system according to the invention is characterised in that said function corresponds with a utilizable link capacity and/or a safety margin capacity being a difference between a total link capacity and said utilizable link capacity and/or a free capacity being a capacity of a link which capacity is not used and which does not form part of said safety margin and/or a controllable capacity being a capacity of a link which capacity is used by controllable traffic signals and/or an uncontrollable capacity being a capacity of a link which capacity is used by uncontrollable traffic signals and/or a controlled Label Switched Path capacity being a capacity of a throughput of all controllable Label Switched Paths and/or a link utilization capacity being a sum of uncontrollable traffic signals and said controlled Label Switched Path capacity.

Each one of said functions will allow an increase of the efficiency of the management of traffic signals, of course dependently upon the certain traffic signals used and upon the problems caused by these certain traffic signals.

A fourth embodiment of the network management system according to the invention is characterised in that a first function corresponding with a utilizable link capacity has exceeded a first threshold, with a second function corresponding with a controllable capacity not having exceeded a second threshold, and with said control signal at least indicating a congested link and/or rerouting at least one of all controllable Label Switched Paths.

In this case, the uncontrollable traffic signals exceed the expectations, as a result the link is congested, and the controllable Label Switched Paths should be rerouted.

It should be noted, that in case of said controller being for 100 % in the form of hardware and/or software, the rerouting should be done automatically, where, in case of said controller at least partly being under control of and/or corresponding with a human being, an indication signal is to be generated.

A fifth embodiment of the network management system according to the invention is characterised in that a first function corresponding with a free capacity has decreased more than a first threshold, with a second function corresponding with an uncontrollable capacity not having decreased more than a second threshold, and with said control signal at least indicating a not well planned Label Switched Path capacity and/or changing a bandwidth for said controllable Label Switched Paths.

In this case, the Label Switched Path capacity is not well planned, and the bandwidth for said controllable Label Switched Paths should be changed.

It should be noted, that in case of said controller being for 100 % in the form of hardware and/or software, the change of the bandwidth should be done automatically, where, in case of said controller at least partly being under control of and/or corresponding with a human being, an indication signal is to be generated.

The invention further relates to a network-unit comprising a controller for controlling traffic signals in a network and comprising a network management system having a generator coupled to said controller for generating at least one control signal destined for said controller for managing said traffic signals in a network.

The network-unit according to the invention is characterised in that said traffic signals comprise at least traffic signals of a first kind and traffic signals of a second kind, with said network management system comprising a processor for comparing at least one function of at least traffic signals of one kind with at least one threshold, and with said generator being coupled to said processor for generating said at least one control signal in dependence of at least one comparison result.

Embodiments of the network-unit according to the invention correspond with said embodiments of the network management system according to the invention.

It should be noted that at least parts of said controller may also form part of said network management system according to the invention.

The invention yet further relates to a network having several network-units each comprising a controller for controlling traffic signals in said network and each comprising a network management system having a generator coupled to said controller for generating at least one control signal destined for said controller for managing said traffic signals in said network.

The network according to the invention is characterised in that said traffic signals comprise at least traffic signals of a first kind and traffic signals of a second kind, with said network management system comprising a processor for comparing at least one function of at least traffic signals of one kind with at least one threshold, and with said generator being coupled to said processor for generating said at least one control signal in dependence of at least one comparison result.

Embodiments of the network according to the invention correspond with said embodiments of the network management system according to the invention.

The invention also relates to a method for managing a network by generating at least one control signal for managing traffic signals in said network.

The method according to the invention is characterised in that said traffic signals comprise at least traffic signals of a first kind and traffic signals of a second kind, with said method comprising a first step of comparing at least one function of at least traffic signals of one kind with at least one threshold and a second step of generating said at least one control signal in dependence of at least one comparison result.

Embodiments of the method according to the invention correspond with said embodiments of the network management system according to the invention.

The invention yet also relates to a computer program product for managing a network by running said computer program product via a processor, which computer program product comprises a generation of at least one control signal for managing traffic signals in said network.

The computer program product according to the invention is characterised in that said traffic signals comprise at least traffic signals of a first kind and traffic signals of a second kind, with said computer program product comprising a comparison of at least one function of at least traffic signals of one kind with at least one threshold and comprising a generation of said at least one control signal in dependence of at least one comparison result.

Embodiments of the computer program product according to the invention correspond with said embodiments of the network management system according to the invention.

The invention will be further explained more detailledly at the hand of an example shown in the drawings, whereby
figure 1 discloses a network-unit according to the invention comprising a network management system according to the invention and several controllers, and
figure 2 discloses a traffic signal capacity overview supporting explanations of the network management system according to the invention, of a method according to the invention and of a computer program product according to the invention.

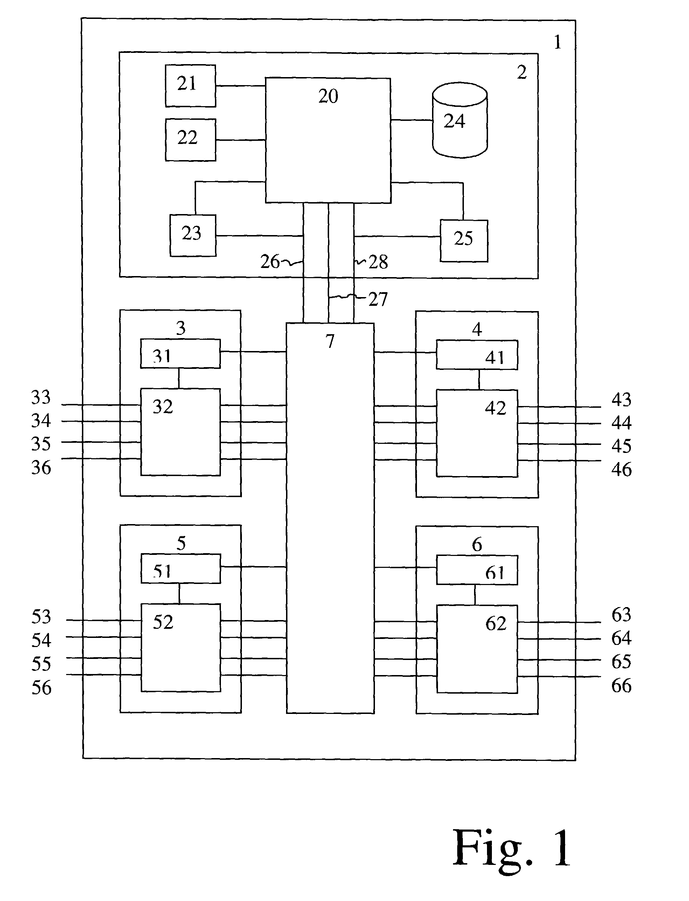

Figure 1 discloses a network-unit 1 comprising a network management system 2 coupled to a switch 7 which is coupled to four interfaces 3-6. Network management system 2 comprises a processor 20 coupled via control connections to a calculator 21, a comparator 22, a detector 23, a memory 24 and a generator 25. Processor 20 is coupled via three connections 26-28 to switch 7, with detector 23 also being coupled to connection 26 and with generator 25 also being coupled to connection 28. Interface 3 comprises a controller 31 coupled via control connections to switch 7 and to an adaptor 32, with adaptor 32 being coupled to four sublinks 33-36 and via four connections to switch 7. Interface 4 comprises a controller 41 coupled via control connections to switch 7 and to an adaptor 42, with adaptor 42 being coupled to four sublinks 43-46 and via four connections to switch 7. Interface 5 comprises a controller 51 coupled via control connections to switch 7 and to an adaptor 52, with adaptor 52 being coupled to four sublinks 53-56 and via four connections to switch 7. Interface 6 comprises a controller 61 coupled via control connections to switch 7 and to an adaptor 62, with adaptor 62 being coupled to four sublinks 63-66 and via four connections to switch 7.

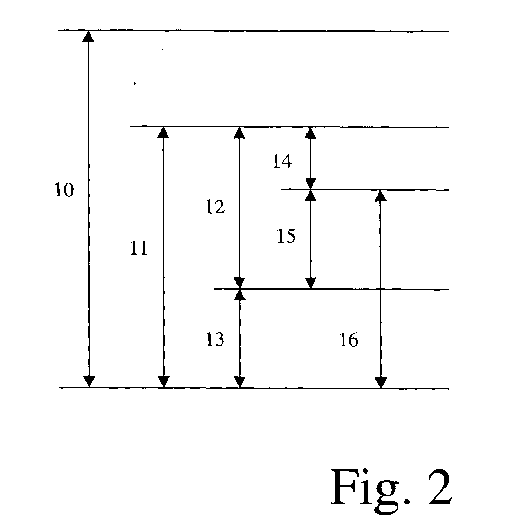

Figure 2 discloses a traffic signal capacity overview per (sub)link, with a total link capacity 10, a utilizable link capacity 11, a controllable capacity 12, an uncontrollable capacity 13, said controllable capacity 12 comprising a free capacity 14 and a controlled Label Switched Path (LSP) capacity 15, and with a link utilization 16 consisting of a sum of said uncontrollable capacity 13 and said controlled Label Switched Path (LSP) capacity 15.

The network-unit according to the invention comprising the network management system according to the invention and one or more controllers functions as follows.

According to a first situation, said four sublinks 33-36 (and 43-46, and 53-56, and 63-66) per interface 3 (and 4, and 5, and 6) each correspond with a different wavelength of an optical fiber coupled to said interface 3 (and 4, and 5, and 6), with adaptor 32 (and 42, and 52, and 62) comprising four wavelength modulators controlled by controller 31 (and 41, and 51, and 61). Via sublink 33 and interface 3 optical traffic signals arrive, which are converted into electrical traffic signals in adaptor 32 or in interface 3 in an other converter not shown. Said electrical traffic signals are supplied via switch 7 and connection 26 (possibly after being buffered in adaptor 32 or elsewhere in interface 3 in a buffer not shown or in switch 7) to detector 23, which detects these electrical traffic signals and informs processor 20. In response, processor 20 controls switch 7 via connection 26 in such a way that said electrical traffic signals flow to interface 4, where these signals are converted into optical traffic signals in adaptor 42 or in interface 4 in an other converter not shown, after which said optical traffic signals are transmitted via sublink 43 to a further network-unit not shown.

According to a first subsituation, detector 23 further detects the electrical traffic signals being of a first kind (controllable traffic signals or foreground like for example controllable LSPs and/or forming part of services having a guaranteed quality-of-service-level) or of a second kind (uncontrollable traffic signals or background like for example uncontrollable LSPs and like for example IP-traffic and/or forming part of services not having said guaranteed quality-of-service-level and then either having an other guaranteed quality-of-service-level or having no guaranteed quality-of-service-level at all), by for example detecting (parts of) one or more headers of one or more of said electrical traffic signals and/or certain codes present in one or more of said electrical traffic signals, and informs processor 20. In response, processor 20 instructs memory 24 to store this information per detected kind, and instructs calculator 21 to calculate a first function, like for example a utilizable link capacity 11 by adding for example (due to being dependent upon the info available) the controlled LSP capacity 15, the uncontrolled capacity 13 and the free capacity 14 for a certain predefined time-interval, and to calculate a second function, like for example a controllable capacity 12 by adding for example (due to being dependent upon the info available) the controlled LSP capacity 15 and the free capacity 14 for a certain predefined time-interval or by just taking this info from memory 24. The results are supplied to comparator 22, which compares these results with thresholds stored in memory 24. In case of a first result of said first function exceeding a first threshold, with a second result of said second function not exceeding a second threshold, processor 20 is informed and instructs generator 25 to generate a control signal.

According to a first possibility, said control signal is supplied via connection 28 and switch 7 to controller 41 in interface 4. In response, controller 41 controls adaptor 42 in such a way that at least one of all controllable Label Switched Paths arriving via sublink 33 are rerouted, for example by amending the label. In this case, the uncontrollable traffic signals have exceeded the expectations, as a result said sublink 33 is congested and said sublink 43 will be congested, and the controllable Label Switched Paths should be rerouted.

According to a second possibility, said control signal is supplied to processor 20, which in response amends information stored in memory 24, in such a way that at least one of all controllable Label Switched Paths arriving via sublink 33 are rerouted, for example by amending the label at the hand of the amended information in memory 24. Again, the uncontrollable traffic signals have exceeded the expectations, as a result said sublink 33 is congested and said sublink 43 will be congested, and the controllable Label Switched Paths should be rerouted.

According to a third possibility, said control signal is supplied to processor 20, which in response informs a previous network-unit not shown which has generated at least part of the traffic signals arriving via sublink 33 and which in repsonse should amend information stored in its memory, in such a way that at least one of all controllable Label Switched Paths originally arriving via sublink 33 are to be rerouted, for example by amending the label at the hand of the amended information in its memory. Again, the uncontrollable traffic signals have exceeded the expectations, as a result said sublink 33 is congested, and the controllable Label Switched Paths arriving via this sublink 33 should be rerouted.

According to a second subsituation, detector 23 further detects the electrical traffic signals being of a first kind (controllable traffic signals or foreground like for example controllable LSPs and/or forming part of services having a guaranteed quality-of-service-level) or of a second kind (uncontrollable traffic signals or background like for example uncontrollable LSPs and like for example IP-traffic and/or forming part of services not having said guaranteed quality-of-service-level and then either having an other guaranteed quality-of-service-level or having no guaranteed quality-of-service-level at all), by for example detecting (parts of) one or more headers of one or more of said electrical traffic signals and/or certain codes present in one or more of said electrical traffic signals, and informs processor 20. In response, processor 20 instructs memory 24 to store this information per detected kind, and instructs calculator 21 to calculate a third function, like for example a free capacity 14 by subtracting for example (due to being dependent upon the info available) the controlled LSP capacity 15 from the controllable capacity 12 for a certain predefined time-interval, and to calculate a fourth function, like for example an uncontrollable capacity 13 by subtracting for example (due to being dependent upon the info available) the controllable capacity 12 from the utilizable link capacity 12 for a certain predefined time-interval or by just taking this info from memory 24. The results are supplied to comparator 22, which compares these results with thresholds stored in memory 24. In case of a third result of said third function having decreased more than a third threshold, with a fourth result of said fourth function not having decreased more than a fourth threshold, processor 20 is informed and instructs generator 25 to generate a control signal.

According to a first possibility, said control signal is supplied via connection 28 and switch 7 to controller 41 in interface 4. In response, controller 41 controls adaptor 42 in such a way that bandwidth is added, for example by activating an extra wavelength (activating sublink 44 in addition to sublink 43). In this case, the Label Switched Path capacity is not well planned, and the bandwidth for said controllable Label Switched Paths should be changed.

According to a second possibility, said control signal is supplied to processor 20, which in response informs a previous network-unit not shown which has generated at least part of the traffic signals arriving via sublink 33 and which in repsonse should amend information stored in its memory, in such a way that bandwidth is to be added, for example by activating an extra wavelength (activating sublink 34 in addition to sublink 33). Again, the Label Switched Path capacity is not well planned, and the bandwidth for said controllable Label Switched Paths should be changed.

According to a second situation, said four sublinks 33-36 (and 43-46, and 53-56, and 63-66) per interface 3 (and 4, and 5, and 6) each correspond with a different wire coupled to said interface 3 (and 4, and 5, and 6), with adaptor 32 (and 42, and 52, and 62) comprising four modulators controlled by controller 31 (and 41, and 51, and 61). Via sublink 33 and interface 3 electrical traffic signals arrive, which are supplied via switch 7 and connection 26 (possibly after being buffered in adaptor 32 or elsewhere in interface 3 in a buffer not shown or in switch 7) to detector 23, which detects these electrical traffic signals and informs processor 20. In response, processor 20 controls switch 7 via connection 26 in such a way that said electrical traffic signals flow to interface 4, where these signals are transmitted via sublink 43 to a further network-unit not shown.

According to a first subsituation, detector 23 further detects the electrical traffic signals being of a first kind (controllable traffic signals or foreground like for example controllable LSPs and/or forming part of services having a guaranteed quality-of-service-level) or of a second kind (uncontrollable traffic signals or background like for example uncontrollable LSPs and like for example IP-traffic and/or forming part of services not having said guaranteed quality-of-service-level and then either having an other guaranteed quality-of-service-level or having no guaranteed quality-of-service-level at all), by for example detecting (parts of) one or more headers of one or more of said electrical traffic signals and/or certain codes present in one or more of said electrical traffic signals, and informs processor 20. In response, processor 20 instructs memory 24 to store this information per detected kind, and instructs calculator 21 to calculate a first function, like for example a utilizable link capacity 11 by adding for example (due to being dependent upon the info available) the controlled LSP capacity 15, the uncontrolled capacity 13 and the free capacity 14 for a certain predefined time-interval, and to calculate a second function, like for example a controllable capacity 12 by adding for example (due to being dependent upon the info available) the controlled LSP capacity 15 and the free capacity 14 for a certain predefined time-interval or by just taking this info from memory 24. The results are supplied to comparator 22, which compares these results with thresholds stored in memory 24. In case of a first result of said first function exceeding a first threshold, with a second result of said second function not exceeding a second threshold, processor 20 is informed and instructs generator 25 to generate a control signal.

According to a first possibility, said control signal is supplied via connection 28 and switch 7 to controller 41 in interface 4. In response, controller 41 controls adaptor 42 in such a way that at least one of all controllable Label Switched Paths arriving via sublink 33 are rerouted, for example by amending the label. In this case, the uncontrollable traffic signals have exceeded the expectations, as a result said sublink 33 is congested and said sublink 43 will be congested, and the controllable Label Switched Paths should be rerouted.

According to a second possibility, said control signal is supplied to processor 20, which in response amends information stored in memory 24, in such a way that at least one of all controllable Label Switched Paths arriving via sublink 33 are rerouted, for example by amending the label at the hand of the amended information in memory 24. Again, the uncontrollable traffic signals have exceeded the expectations, as a result said sublink 33 is congested and said sublink 43 will be congested, and the controllable Label Switched Paths should be rerouted.

According to a third possibility, said control signal is supplied to processor 20, which in response informs a previous network-unit not shown which has generated at least part of the traffic signals arriving via sublink 33 and which in repsonse should amend information stored in its memory, in such a way that at least one of all controllable Label Switched Paths originally arriving via sublink 33 are to be rerouted, for example by amending the label at the hand of the amended information in its memory. Again, the uncontrollable traffic signals have exceeded the expectations, as a result said sublink 33 is congested, and the controllable Label Switched Paths arriving via this sublink 33 should be rerouted.

According to a second subsituation, detector 23 further detects the electrical traffic signals being of a first kind (controllable traffic signals or foreground like for example controllable LSPs and/or forming part of services having a guaranteed quality-of-service-level) or of a second kind (uncontrollable traffic signals or background like for example uncontrollable LSPs and like for example IP-traffic and/or forming part of services not having said guaranteed quality-of-service-level and then either having an other guaranteed quality-of-service-level or having no guaranteed quality-of-service-level at all), by for example detecting (parts of) one or more headers of one or more of said electrical traffic signals and/or certain codes present in one or more of said electrical traffic signals, and informs processor 20. In response, processor 20 instructs memory 24 to store this information per detected kind, and instructs calculator 21 to calculate a third function, like for example a free capacity 14 by subtracting for example (due to being dependent upon the info available) the controlled LSP capacity 15 from the controllable capacity 12 for a certain predefined time-interval, and to calculate a fourth function, like for example an uncontrollable capacity 13 by subtracting for example (due to being dependent upon the info available) the controllable capacity 12 from the utilizable link capacity 12 for a certain predefined time-interval or by just taking this info from memory 24. The results are supplied to comparator 22, which compares these results with thresholds stored in memory 24. In case of a third result of said third function having decreased more than a third threshold, with a fourth result of said fourth function not having decreased more than a fourth threshold, processor 20 is informed and instructs generator 25 to generate a control signal.

According to a first possibility, said control signal is supplied via connection 28 and switch 7 to controller 41 in interface 4. In response, controller 41 controls adaptor 42 in such a way that bandwidth is added, for example by activating an extra modulator (activating sublink 44 in addition to sublink 43). In this case, the Label Switched Path capacity is not well planned, and the bandwidth for said controllable Label Switched Paths should be changed.

According to a second possibility, said control signal is supplied to processor 20, which in response informs a previous network-unit not shown which has generated at least part of the traffic signals arriving via sublink 33 and which in repsonse should amend information stored in its memory, in such a way that bandwidth is to be added, for example by activating an extra modulator (activating sublink 34 in addition to sublink 33). Again, the Label Switched Path capacity is not well planned, and the bandwidth for said controllable Label Switched Paths should be changed.

With respect to figure 2, the following is observed. At the hand of well-known SNMPs (Simple Network Management Protocols) and/or MIBs (Managed Information Bases), the total link capacity 10 and the utilizable link capacity 11 can be found, with said total link capacity 10 for example being 644 Mbit/s (with said interfaces being the bottle neck) and with said utilizable link capacity 11 for example being 20% or 50% of said total link capacity 10 (with this 20% or 50% being chosen by the operator). The controlled LSP capacity 15 is for example measured per time-interval by for example detecting for example (parts of) one or more headers of one or more traffic signals and/or certain codes present in one or more traffic signals, which (parts of) one or more headers and/or certain codes indicate/define the traffic signal being a controllable LSP, and by for example adding all bytes of all controllable LSPs during this time-interval (and possibly subtracting the number of bytes counted at the beginning of this time-interval from the number of bytes counted at the end of this time-interval).

According to a first possibility, the link utilization 16 is for example measured per time-interval by adding all bytes of all traffic signals during this time-interval (and possibly subtracting the number of bytes counted at the beginning of this time-interval from the number of bytes counted at the end of this time-interval). Then, the uncontrollable capacity 13 is calculated by subtracting the measured controlled LSP capacity 15 from this link utilization 16.

According to a second possibility, the uncontrollable capacity 13 is for example measured per time-interval by detecting for example (parts of) one or more headers of one or more traffic signals and/or certain codes present in one or more traffic signals, which (parts of) one or more headers and/or certain codes indicate/define the traffic signal now being an uncontrollable traffic signal, and by adding all bytes of all uncontrollable traffic signals during this time-interval (and possibly subtracting the number of bytes counted at the beginning of this time-interval from the number of bytes counted at the end of this time-interval). Then, the link utilization 16 is calculated by adding the uncontrollable capacity 13 and the controlled LSP capacity 15.

Finally, the free capacity 14 is for example calculated by subtracting the link utilization 16 from the utilizable link capacity 11, and the controllable capacity 12 is for example calculated by adding the free capacity 14 and the controlled LSP capacity 15 etc. Other possibilities are however not to be excluded. Thanks to the invention shown in the figures, the utilizable link capacity 11 which used to be chosen, for safety purposes, at for example 20% or 30% of the total link capacity 10, can now be chosen at for example 40% or 50% of the total link capacity 10, due to a much more efficient network management, resulting in a much higher efficiency of the operator's network !

Each situation and/or subsituation and/or each possibility can be combined with each other situation and/or each other subsituation and/or each other possibility. Each part of network-unit 1 and of network management system 2, shown in the form of a block or not shown, can be 100% hardware, 100% software or a mixture of both. Therefore, a detector also comprises a detecting function, a generator also comprises a generating function, a comparator also comprises a comparing function, and a calculator also comprises a calculating function. Each block shown or not shown can be integrated with each other block shown and/or not shown per network-unit 1, network management system 2, interface 3-6, but also per combinations of at least two of said network-unit 1, network management system 2 and interface 3-6. In addition to the memory shown, each block can have a further memory not shown for efficiency purposes. Memory 24 can be for example a RAM, or a server controlled by processor 20 or a further processor not shown, or a combination of a memory and (de)multiplexer, etc. Detector 23 can be for example a comparator and/or have a comparing function, thereby receiving comparison values via processor 20. Generator 25 can be for example a converter and/or have a converting function, or a table memory generating output values in response to input values etc. Switch 7 for example comprises a shift register and a processor/memory, etc. Althought just unidirectional streams have been described, the invention may be used for bidirectional streams as well. Network management system 2 may also be located in one or more of said interfaces 3-6. Network-unit 1 may be a switch, a router, a bridge, a server etc. Usually just the relevant parts of said traffic signals will be used for management purposes and will be sent to the corresponding network management system, with a selector possibly located in each interface taking care of selecting these relevant parts. Further, any optical-electrical conversion may be done just before the network management system, with for example switch 7 being an optical switch. Said control signal may further comprise an indication for a human being who is in control of the network-unit. To a person skilled in the art it will be clear that many other embodiments, situations, subsituations and possibilities can be got without departing from the scope of this invention.

## Claims

1. Network management system (2) comprising a generator (25) for generating at least one control signal for managing traffic signals in a network, **characterised in that** said traffic signals comprise at least traffic signals of a first kind and traffic signals of a second kind, with said network management system (2) comprising a processor (20,22) for comparing at least one function of at least traffic signals of one kind with at least one threshold, and with said generator (25) being coupled to said processor (20,22) for generating said at least one control signal in dependence of at least one comparison result.

2. Network management system (2) according to claim 1, **characterised in that** said traffic signals of a first kind mainly correspond with controllable traffic signals, with said traffic signals of a second kind mainly corresponding with uncontrollable traffic signals.

3. Network management system (2) according to claim 1 or 2, **characterised in that** said traffic signals of a first kind form part of services having a guaranteed quality-of-service-level, with said traffic signals of a second kind forming part of services not having said guaranteed quality-of-service-level.

4. Network management system (2) according to claim 1, 2 or 3, **characterised in that** said function corresponds with a utilizable link capacity (11) and/or a safety margin capacity being a difference between a total link capacity (10) and said utilizable link capacity (11) and/or a free capacity (14) being a capacity of a link which capacity is not used and which does not form part of said safety margin and/or a controllable capacity (12) being a capacity of a link which capacity is used by controllable traffic signals and/or an uncontrollable capacity (13) being a capacity of a link which capacity is used by uncontrollable traffic signals and/or a controlled Label Switched Path capacity (15) being a capacity of a throughput of all controllable Label Switched Paths and/or a link utilization capacity (16) being a sum of uncontrollable traffic signals and said controlled Label Switched Path capacity (15).

5. Network management system (2) according to claim 1, 2, 3 or 4, **characterised in that** a first function corresponding with a utilizable link capacity (11) has exceeded a first threshold, with a second function corresponding with a controllable capacity (12) not having exceeded a second threshold, and with said control signal at least indicating a congested link and/or rerouting at least one of all controllable Label Switched Paths.

6. Network management system (2) according to claim 1, 2, 3 or 4, **characterised in that** a first function corresponding with a free capacity (14) has decreased more than a first threshold, with a second function corresponding with an uncontrollable capacity (13) not having decreased more than a second threshold, and with said control signal at least indicating a not well planned Label Switched Path capacity and/or changing a bandwidth for said controllable Label Switched Paths.

7. Network-unit (1) comprising a controller (31,41) for controlling traffic signals in a network and comprising a network management system (2) having a generator (25) coupled to said controller (31,41) for generating at least one control signal destined for said controller (31,41) for managing said traffic signals in a network, **characterised in that** said traffic signals comprise at least traffic signals of a first kind and traffic signals of a second kind, with said network management system (2) comprising a processor (20,22) for comparing at least one function of at least traffic signals of one kind with at least one threshold, and with said generator (25) being coupled to said processor (20,22) for generating said at least one control signal in dependence of at least one comparison result.

8. Network having several network-units (1) at least one comprising a controller (31,41) for controlling traffic signals in said network and at least one comprising a network management system (2) having a generator (25) coupled to said controller (31,41) for generating at least one control signal destined for said controller (31,41) for managing said traffic signals in said network, **characterised in that** said traffic signals comprise at least traffic signals of a first kind and traffic signals of a second kind, with said network management system comprising a processor (20,22) for comparing at least one function of at least traffic signals of one kind with at least one threshold, and with said generator (25) being coupled to said processor (20,22) for generating said at least one control signal in dependence of at least one comparison result.

9. Method for managing a network by generating at least one control signal for managing traffic signals in said network, **characterised in that** said traffic signals comprise at least traffic signals of a first kind and traffic signals of a second kind, with said method comprising a first step of comparing at least one function of at least traffic signals of one kind with at least one threshold and a second step of generating said at least one control signal in dependence of at least one comparison result.

10. Computer program product for managing a network by running said computer program product via a processor, which computer program product comprises a generation of at least one control signal for managing traffic signals in said network, **characterised in that** said traffic signals comprise at least traffic signals of a first kind and traffic signals of a second kind, with said computer program product comprising a comparison of at least one function of at least traffic signals of one kind with at least one threshold and comprising a generation of said at least one control signal in dependence of at least one comparison result.
